# EUROPEAN PATENT APPLICATION

(11) **EP 2 763 052 A1**
(43) Date of publication of application: **06.08.2014**
(21) Application number: 11873122.3
(22) Date of filing: 29.09.2011
(51) Int. Cl.: G06F 17/30

(54) **SEARCH METHOD AND INFORMATION MANAGEMENT DEVICE**

(71) Applicant: Fujitsu Limited, Kawasaki-shi, Kanagawa 211-8588 (JP)
(72) Inventor: OBAYASHI, Toshifumi, Kawasaki-shi Kanagawa 211-8588 (JP); TAMAI, Kyohei, Kawasaki-shi Kanagawa 211-8588 (JP)
(74) Representative: HOFFMANN EITLE
(86) International application number: PCT/JP2011/072478
(87) International publication number: WO 2013/046413

(57) **Abstract**

A search method to be implemented in a computer which performs a process to search searching information including a plurality of items that are targets of information search, includes, in response to receiving a search request for the searching information, comparing one or more first character strings stored in a storage in a related manner to information related to a source of the search request, and a second character string specified in the search request, in order to judge the item corresponding to the second character string based on a result of the comparing, and searching the searching information using the second character string as a search condition related to the item that is judged as corresponding to the second character string.

## Description

### TECHNICAL FIELD

The present invention relates to an information search method and an information managing apparatus.

### BACKGROUND ART

A free word search may be made using a Web site search service. More particularly, a user inputs one or more character strings as a search condition. The search service searches for a Web site having a high relation to the input character string or strings, and outputs a search result. Such a search method is very user-friendly, and is the leading method used in current Web site search services.

The free word search described above is suited for searching free information such as the Web site. However, it may be regarded that the free word search described above is unsuited for searching regular information represented by a plurality of items, such as information managed in an RDB (Relational Data-Base). This is because the search for the information represented by a plurality of items has a low possibility of obtaining a desired search result unless a search condition is input to indicate values of the items. Accordingly, in general, the conventional search for the information represented by the plurality of items urges the value to the input via screen with respect to each of the plurality of items.

### PATENT DOCUMENTS

Patent Document 1: Japanese Laid-Open Patent Publication No. 2009-271867

### DISCLOSURE OF THE INVENTION

### PROBLEM TO BE SOLVED BY THE INVENTION

However, the input of the regular search condition via the screen may be troublesome for the user in the current trend in which the free word search is the leading method used.

Accordingly, according to one aspect, it is an object to provide a search method and an information managing apparatus that can improve the operation ease of the search related to the information having a plurality of items.

### MEANS OF SOLVING THE PROBLEM

According to one proposal, a search method to be implemented in a computer which performs a process to search searching information including a plurality of items that are targets of information search, includes, in response to receiving a search request for the searching information, comparing one or more first character strings stored in a storage in a related manner to information related to a source of the search request, and a second character string specified in the search request, in order to judge the item corresponding to the second character string based on a result of the comparing; and searching the searching information using the second character string as a search condition related to the item that is judged as corresponding to the second character string.

### EFFECTS OF THE INVENTION

According to one embodiment, the operation ease of the search related to the information having a plurality of items can be improved.

### BRIEF DESCRIPTION OF THE DRAWING

FIG. 1 is a diagram illustrating an example of a configuration of an information managing system in one embodiment of the present invention;
FIG. 2 is a diagram illustrating an example of a hardware configuration of an information managing apparatus in one embodiment of the present invention;
FIG. 3 is a diagram illustrating an example of a functional configuration of the information managing apparatus in one embodiment of the present invention;
FIG. 4 is a flow chart for explaining an example of processing procedures of a search process;
FIG. 5 is a flow chart for explaining the example of processing procedures of the search process;
FIG. 6 is a diagram illustrating an example of a configuration of a user-related information storage part;
FIG. 7 is a flow chart for explaining an example of processing procedures of an address judging process using an address judging information storage part; and
FIG. 8 is a flow chart for explaining an example of processing procedures of a genre judging process using a genre judging information storage part.

### MODE OF CARRYING OUT THE INVENTION

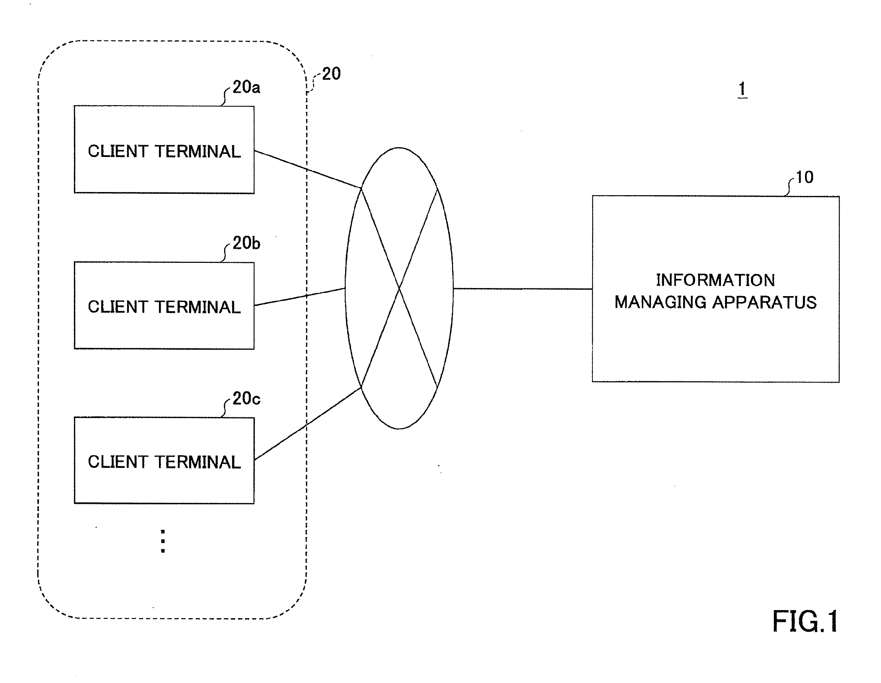

A description will be given of embodiments of the present invention, by referring to the drawings. FIG. 1 is a diagram illustrating an example of a configuration of an information managing system in one embodiment of the present invention. In an information managing system 1 illustrated in FIG. 1, an information managing apparatus 10 and a plurality of client terminals 20, such as client terminals 20a, 20b, 20c, and the like, are communicable via a network such as the Internet, a wireless communication network, and the like, for example.

The information managing apparatus 10 is represented by a plurality of regular items that are targets of the information search. In other words, the information managing apparatus 10 is a computer having a management function (database function) to manage the searching information to be searched, that is, the information having the plurality of items. In this embodiment, the information managing apparatus 10 manages facility information as the searching information. The facility information includes items such as a name, an address telephone number, a genre, position information (longitude and latitude), and the like. Of course, the searching information may be arbitrary information other than the facility information.

The client terminal 20 inputs a search request for the facility information with respect to the information managing apparatus 10. In other words, the client terminal 20 is a computer having a communication function to send the search request with respect to the information managing apparatus 10. Examples of the client terminal 20 include a mobile phone, a smartphone, on-board apparatus for vehicles, PC (Personal Computer), and the like.

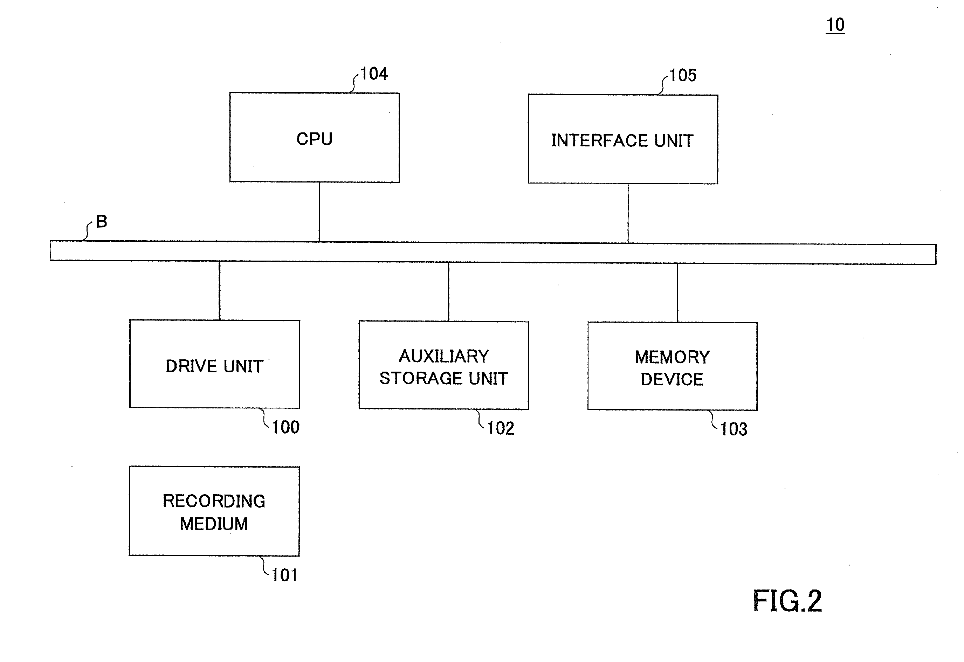

FIG. 2 is a diagram illustrating an example of a hardware configuration of the information managing apparatus in one embodiment of the present invention. The information managing apparatus 10 illustrated in FIG. 2 includes a drive unit 100, an auxiliary storage unit 102, a memory device 103, a CPU 104, an interface unit 105, and the like that are are mutually connected via a bus B.

A program that executes processes of the information managing apparatus 10 is provided by a recording medium 101. When the recording medium 101 storing the program is set in the drive unit 100, the program is read from the recording medium 101 and installed into the auxiliary storage unit 102 via the drive unit 100. Of course, the program does not necessarily have to be installed from the recording medium 101, and the program may be downloaded from another computer via a network. The auxiliary storage unit 102 stores the installed program, together with necessary files, data, and the like.

The program is read from the auxiliary storage unit 102 and stored in the memory device 103 in response to a program boot instruction. The CPU 104 executes the functions of the information managing apparatus 10 according to the program stored in the memory device 103. The interface unit 105 provides an interface for connecting the information managing apparatus 10 to the network.

Examples of the recording medium 101 include portable recording media such as a CD-ROM, DVD disk, USB memory, and the like. In addition, examples of the auxiliary storage unit 102 include a HDD (Hard Disk Drive), flash memory, and the like. The recording medium 101 and the auxiliary storage unit 102 both correspond to a computer-readable storage medium.

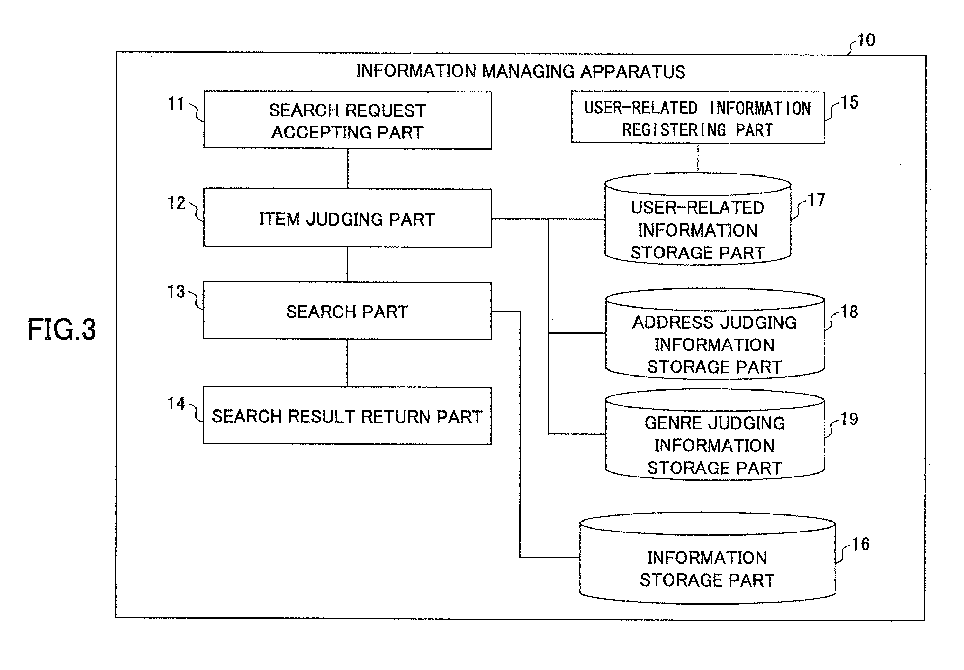

FIG. 3 is a diagram illustrating an example of a functional configuration of the information managing apparatus in one embodiment of the present invention. In FIG. 3, the information managing apparatus 10 includes a search request accepting part 11, an item judging part 12, a search part 13, a search result return part 14, a user-related information registering part 15, and the like. The program installed in the information managing apparatus 10, when executed by the CPU 104, causes the CPU 104 to perform processes of these parts of the information managing apparatus 10. The information managing apparatus 10 also includes an information storage part 16, a user-related information storage part 17, an address judging information storage part 18, a genre judging information storage part 19, and the like. Each of these storage parts may be formed by the auxiliary storage unit 102, or by a storage unit or the like that is connected to the information managing apparatus 10 via the network.

The search request accepting part 11 receives the search request sent from the client terminal 20. The search request includes one or more character strings as the search condition. The search request does not specify the items of the facility information corresponding to each character string, that is, does not specify the items to which the search condition is related. In a case in which the search request includes a plurality of character strings, each character string is segmented by a space, for example. In other words, the search condition is input at the client terminal 20 according to the free word format.

The item judging part 12 judges the items of the facility information to which the character string of the search condition corresponds. This judgment of the item judging part 12 is performed by referring to the user-related information storage part 17, the address judging information storage part 18, the genre judging information storage part 19, and the like. The user-related information storage part 17 stores, for each user of the client terminal 20, character string groups, word groups, and the like that are extracted in the past from the character string acquired as an address related to the user. In the following description, these character string groups, word groups, and the like will be referred to as "user-related information". The character string groups, word groups, and the like may be extracted from the character string using a known technique, such as the technique utilized to create an inverted index, for example.

The address judging information storage part 18 is formed by a database including a full-text search engine, for example. The address judging information storage part 18 stores lists of names of prefectures, municipalities, and the like, for example, as the names of places forming the address, at the inverted indexes generated by the full-text search engine. For example, the full-text search engine of the address judging information storage part 18 extracts the name of place from records of the database managing the list of nationwide addresses or administrative district, in order to generate the inverted index. Hence, the list of the names of places extracted in an unrelated manner to a particular user is stored at the inverted index included in the address judging information storage part 18.

The genre judging information storage part 19 is formed by a database including a full-text search engine, for example. The genre judging information storage part 19 stores a list of character strings that are used as genres, at the inverted indexes generated by the full-text search engine.

The search part 13 searches the facility information from the information storage part 16, using a judgment result of the item judging part 12. That is, the search part 13 searches the facility information using a part or all of each character string included in the search condition, as the character string corresponding to the item judged by the item judging part 13.

The search result return part 14 returns the facility information that is searched, as the search result of the search part 13, to the client terminal 20 at a source of the search request.

The user-related information registering part 14 collects one or more character strings that are input as the address related to the user, and extracts the character string group (word group) from each of the character strings. In other words, the user-related information registering part 15 decomposes each of the character strings into the character string groups (word groups), and registers the extracted character string groups in the user-related information storage part 17 in a related manner to the user.

An example of the character string that is input as the address related to the user includes the character string that is input to an address input field when making a user registration related to the service provided by the information managing apparatus 10, for example. Alternatively, the user-related information registering part 15 may acquire a character string indicating the address that is managed in a related manner to the user in another computer system. As an example, the user-related information registering part 15 may link and coordinate with a computer system that provides telematics services, and acquire the character string indicating a home address that is input by the user, an address that is input by the user when setting a target destination, or an address corresponding to the longitude and latitude that are set by the user as the target destination, with respect to an on-board apparatus of a vehicle, for example. Technically, "in a related manner to the user" refers to relating something to identification information of the user, or to identification information of the client terminal 20 used by the user.

The information storage part 16 stores the facility information.

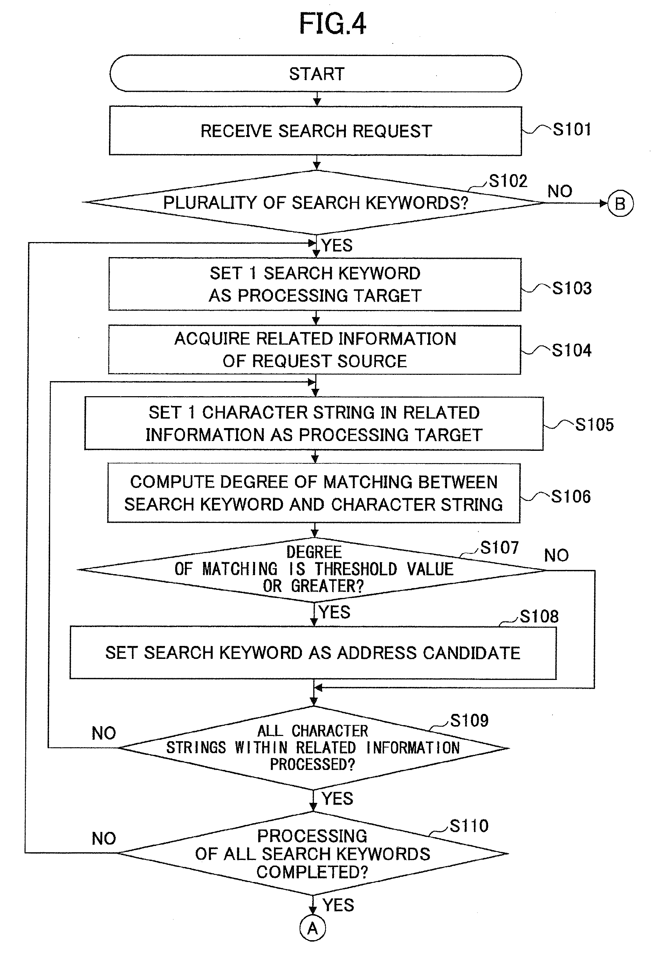

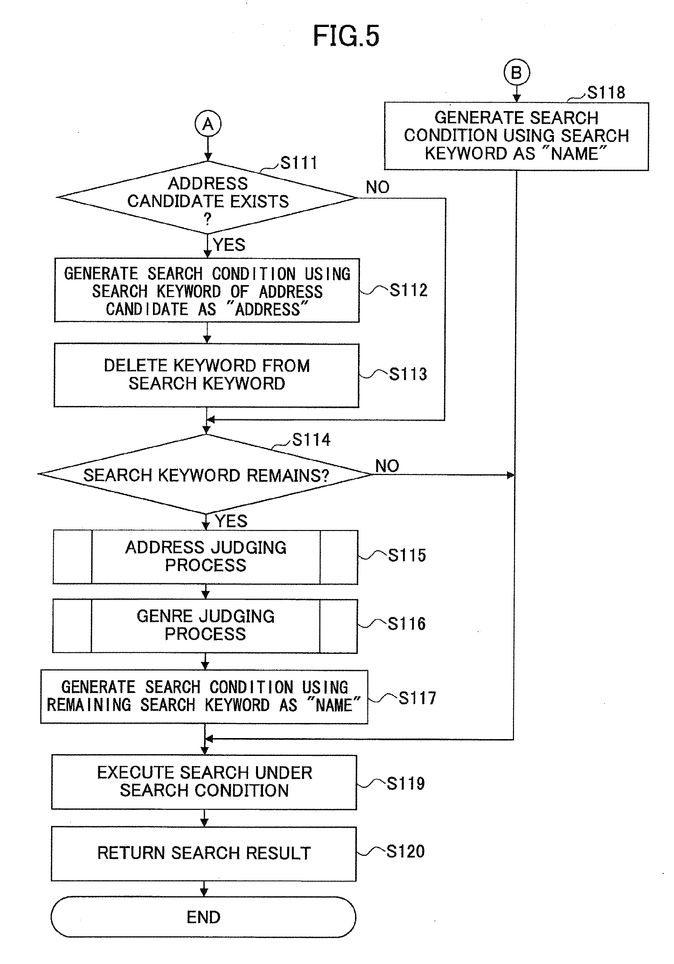

Next, a description will be given of processing procedures executed by the information managing apparatus 10. FIGs. 4 and 5 are flow charts for explaining an example of the processing procedures of a search process.

In step S101, the search request accepting part 11 receives the search request from the client terminal 20. The search request includes one or more character strings as the search condition. In the following description, one character string that is used as the search condition will be referred to as a "search keyword".

Next, the item judging part 12 judges whether a plurality of search keywords are included in the search request (step S102). When there are a plurality of search keywords (Yes in step S102), the item judging part 12 sets one of the plurality of search keywords as a processing target (step S103). In the following description, the search keyword that forms the processing target will be referred to as a "current keyword". Next, the item judging part 12 acquires the user-related information that is registered with respect to the user at the source of the search request, from the user-related information storage part 17 (step S104).

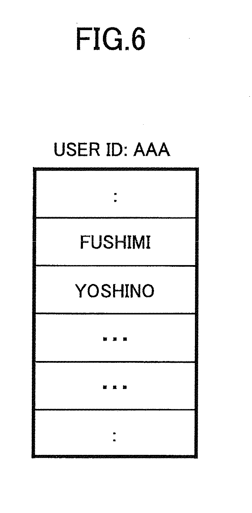

FIG. 6 is a diagram illustrating an example of a configuration of the user-related information storage part. As illustrated in FIG. 6, the user-related information includes character string groups that are extracted from the character string that is input as the address related to the user, in a related manner to the identification information (user ID) of the user. FIG. 6 illustrates the user-related information that is related to the user whose user ID is "AAA", however, the user-related information storage part 17 may also store the user-related information related to other users. In this embodiment, it is determined beforehand that the character string groups stored in the user-related information storage part 17 are the character strings related to the address. For this reason, it may be regarded that the user-related information storage part 17 essentially stores, in the user-related manner, the character string groups, and information indicating the facility information to which the character string groups correspond.

The user ID at the source of the search request may be specified at the time of a user authentication that is performed at a stage preceding the stage that accepts the search request, for example. In a case in which no user authentication is performed, the user ID may be specified based on the identification information of the client terminal 20, such as the address information and the like, for example. In this case, the identification information of the client terminal 20 may be used as the user ID, or the user ID may be specified based on correspondence information indicating a correspondence between the identification information of the client terminal 20 and the user ID. The correspondence information may be stored in the auxiliary storage unit 102, for example.

Next, the item judging part 12 sets one of the character string groups included in the acquired user-related information as the processing target (step S105). Next, the item judging part 12 computes a degree of matching between the current keyword and the character string that is set as the processing target (step S106). In the following description, the degree of matching may also be referred to as a score value. The degree of matching refers to the extent to which the two compared character strings match or the extent of the similarity of the two compared character strings. A known technique may be used to compute the degree of matching. For example, the matching degree may be computed from a ratio of the number of matching characters with respect to the number of characters included in the character string that is the comparing target.

Next, the item judging part 12 judges whether the computed degree of matching is greater than or equal to a threshold value (step S107). When the degree of matching is greater than or equal to the threshold value (Yes in step S107), the item judging unit 12 sets the current keyword as a candidate (address candidate) corresponding to the item of the address (step S108). On the other hand, when the degree of matching is less than the threshold value (No in step S107), the current keyword is not set as the address candidate.

Steps S105 through S108 are executed in an order with respect to each character string included in the user-related information that is acquired in step S104 (step S109). In addition, steps S103 through S109 are executed in an order with respect to each search keyword included in the search condition (step S110). In other words, each search keyword included in the search condition and each character string included in the user-related information are compared, and the address candidate is extracted from the search keyword group included in the search condition.

Next, the item judging part 12 judges whether a search keyword that is extracted as the address candidate exists (step S111, FIG. 5). When the search keyword that is extracted as the address candidate exists (Yes in step S111), the item judging part 12 generates the search condition using the search keyword of the address candidate as a search keyword corresponding to the item of the address in the facility information (step S112). For example, the search condition includes the corresponding search keyword in the value of the item of the address. In a case in which a plurality of search keywords exist as the address candidate, the search condition may be a logical sum (OR) of each of the plurality of search keywords. In other words, the search condition may include one of the plurality of search keywords in the value of the item of the address.

Next, the item judging part 12 deletes the search keyword that is extracted as the address candidate, from a set of search keywords included in the search request (step S113). In other words, in step S114 and subsequent steps, the search keyword that is extracted as the address candidate in the above described process is excluded from the processing target.

In a case in which no search keyword exists as the address candidate (No in step S111), steps S112 and S113 are not executed.

Next, the item judging part 12 judges whether one or more search keywords included in the search request remain (step S114). This judgment is performed to determine whether the search keyword remains after executing step S113. When no search keyword remains (No in step S114), the process advances to step S119.

When the search keyword remains (Yes in step S114), the item judging part 12 executes a judging process (address judging process) to judge whether the remaining search keyword corresponds to the item of the address of the facility information, using the address judging information storage part 18 (step S115). Next, the item judging part 12 executes a judging process (genre judging process) to judge whether the remaining search keyword corresponds to the item of the genre of the facility information, using the genre judging information storage part 19 (step S116). The remaining search keyword in step S116 refers to the search keyword that remains after step S115 is executed. Accordingly, when no more remaining search keyword exists after executing step S115, step S116 is not executed.

Next, when the search keyword remains after executing steps S115 and S116, the item judging part 12 generates the search condition using the remaining search keyword as a search keyword corresponding to the item of the name of the facility information (step S117). The search condition generated in step S117 is merged (combined) with the search condition generated in the above described process of the preceding stage, under a logical product (AND) condition, for example. Of course, the search conditions may be merged under a logical sum (OR) condition.

On the other hand, when only one search keyword remains in step S102 (No in step S102), the item judging part 12 generates the search condition using the single remaining search keyword as a search keyword corresponding to the "name" of the facility information (step S118).

Next, the search part 13 searches the facility information matching the search condition generated by the item judging part 12, from the information storage part 16 (step S119). Next, the search result return part 14 returns the searched facility information to the client terminal 20 at the source of the search request (step S120).

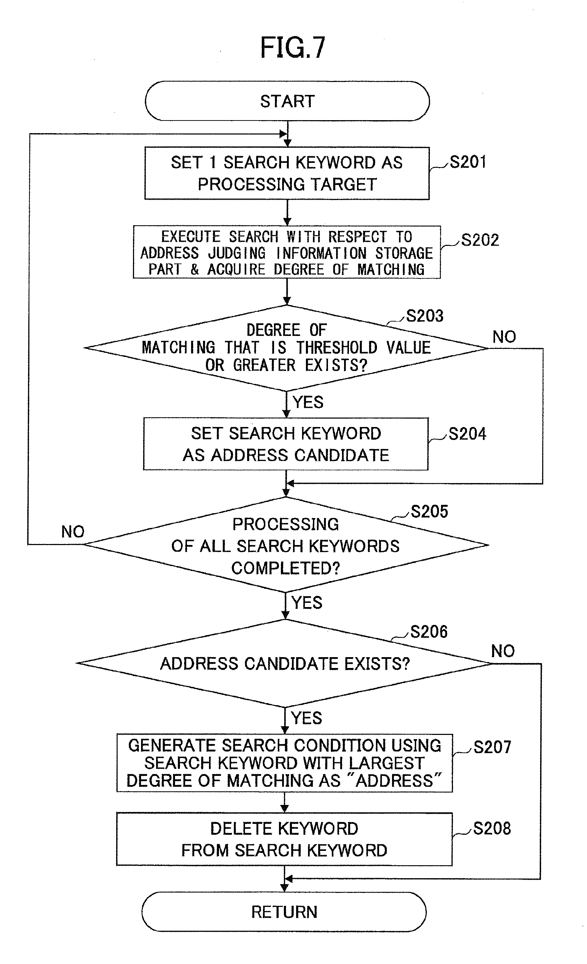

A more detailed description will be given of step S115. FIG. 7 is a flow chart for explaining an example of processing procedures of the address judging process using the address judging information storage part.

In step S201, the item judging part 12 sets one of the remaining search keywords as the processing target (hereinafter referred to as "current keyword"). Next, with respect to the current keyword, the item judging part 12 requests a search with respect to the full-text search engine of the address judging information storage part 18, and acquires, as a search result, the degree of matching (score value) for each character string compared with the current keyword (step S202). In other words, the full-text search engine searches the character string matching the current keyword, from the inverted indexes included in the address judging information storage part 18, and outputs the searched character string and the matching degree of the searched character string with respect to the current keyword. The matching not only includes a complete or perfect match, but also to a partial match.

Next, the item judging part 12 judges whether the acquired degree of matching for the search keywords includes a degree of matching greater than or equal to a threshold value (step S203). When there is a degree of matching greater than or equal to the threshold value (Yes in step S203), the item judging part 12 sets the current keyword as the address candidate (step S204). On the other hand, when there is no degree of matching greater than or equal to the threshold value (no in step S203), the current keyword is not set as the address candidate. Steps S201 through S204 are executed in an order with respect to each of the remaining search keywords.

Next, the item judging part 12 judges whether the search keyword extracted as the address candidate exists (step S206). When the search keyword extracted as the address candidate exists (Yes in step S206), the item judging part 12 generates the search condition using the search keyword having a highest degree of matching as the search keyword corresponding to the item of the address (step S207). Accordingly, in a case in which a single search keyword exists as the address candidate, this single search keyword is used as the search keyword corresponding to the item of the address. In a case in which a plurality of search keywords exist as the address candidate, one of the plurality of search keywords having the highest degree of matching is used as the search keyword corresponding to the item of the address. The search condition generated in step S207 is merged (combined) with the search condition generated in the above described process of the preceding stage, under a logical product (AND) condition, for example. Of course, the search conditions may be merged under a logical sum (OR) condition.

Next, the item judging part 12 deletes the search keyword having the highest degree of matching from the set of search keywords remaining in at the stage of step S201 (step S208).

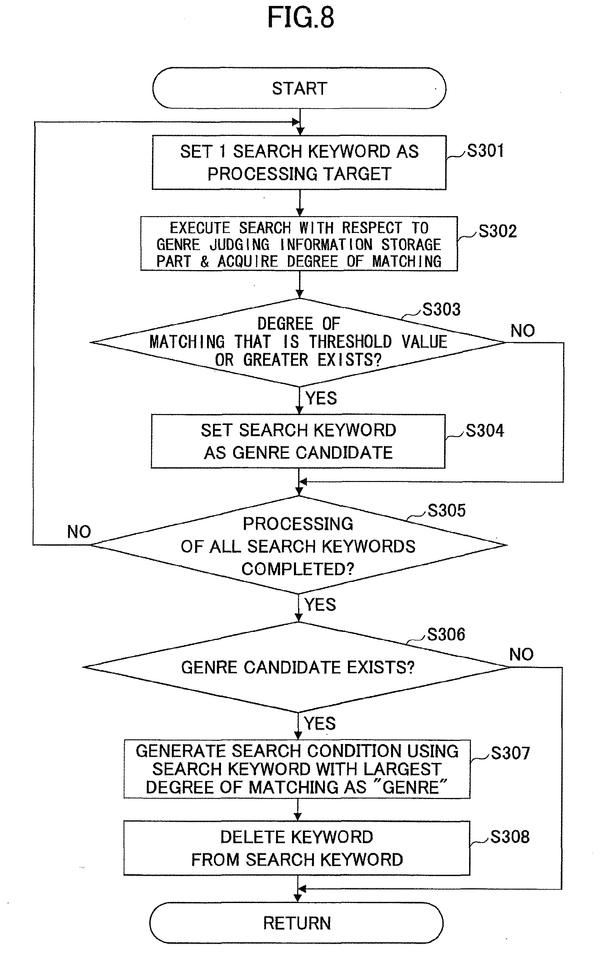

Next, a description will be given of step S116 illustrated in FIG. 4. FIG. 8 is a flow chart for explaining an example of processing procedures of the genre judging process using the genre judging information storage part. The processing procedures illustrated in FIG. 8 are the same as the processing procedures illustrated in FIG. 7, except that the genre judging information storage part 19 is utilized in place of the address judging information storage part 18, and that the search keyword having the highest degree of matching is used as a search keyword corresponding to the item of the genre of the facility information. Accordingly, a description of each step illustrated in FIG. 8 will be omitted.

As described above, the information managing apparatus 10 in this embodiment automatically judges the item of the searching information (facility information in this embodiment) to which one or more search keywords included (specified) in the search request correspond, and performs the search based on the judgment result. Hence, a free word format user interface can be provided to improve the operation ease, and the possibility of obtaining a search result conforming to the search intentions of the user can be increased.

Particularly in this embodiment, the character string groups forming the addresses input in the past for each user are stored in the user-related information storage part 17, and a judgment is made to determine whether the search keyword corresponds to the item of the address, based on a comparison of the search keyword and the character string groups. Accordingly, the judgment can be made to determine whether the search keyword corresponds to the item of the address, by taking into consideration the circumstances in which the meaning of a word is relative according to the user. More particularly, for a user A residing at an address including the name of place "Yoshino", it may be regarded that the character string "Yoshino" may be used as the name of place at many instances. On the other hand, for a user B who is unrelated to the name of place "Yoshino", the character string "Yoshino" may be used as a part of the name of a restaurant at many instances. In this case, the character string "Yoshino" is related to the user A in the user-related information storage part 17, but is not related to the user B. As a result, in a case in which the user A inputs the search keyword "Yoshino", the search condition is generated using "Yoshino" as a search keyword corresponding to the item of the address. On the other hand, in a case in which the user B inputs the search keyword "Yoshino", there is a high possibility that "Yoshino" will not be regarded as an item of the address, and will instead by regarded as an item of "name". Hence, there is a high possibility that information of the facility located in the region "Yoshino" is searched with respect to the user A, and information of the facility (for example, restaurant) including the name "Yoshino" is searched with respect to the user B. In other words, there is a high possibility of obtaining the search result conforming to the search intentions of each user.

In this embodiment, the user-related information storage part 17 is described as storing the character string extracted from the address, however, the user-related information may be generated with respect to other items forming the facility information. In addition, the user-related information may be generated with respect to a plurality of items, and not only with respect to one item. For example, the user-related information related to the plurality of items may be information including the character string groups corresponding to the address and the character string groups corresponding to the genre, for each user. In this case, information that indicates the item to which each character string corresponds may also be stored in the user-related information storage part 17.

In addition, in the example of this embodiment, the user-related information storage part 17 stores one or more character strings forming the address, in the related manner to the user (user ID). In this example, in a case in which the user utilizes a plurality of client terminals 20, a convenient feature is obtained in that the same search result is obtained regardless of which one of the plurality of client terminals 20 is utilized for the search.

Of course, the user-related information storage part 17 may store one or more character strings forming the address, for each identification information of the client terminal 20. In this case, there is a possibility that the user who utilizes a plurality of client terminals 20 may obtain a different search result for each of the client terminals utilized for the search. For example, in a case in which the plurality of client terminals 20 utilized by the user are a PC for home use, a PC for office use, and a mobile phone, there is a possibility that the meaning of the same word will be different depending on the situation in which the PC for home use, or the PC for office use, or the mobile phone is utilized for the search. Accordingly, when the user-related information storage part 17 stores one or more character strings forming the address for the identification information of each of the plurality of client terminals 20, the information managing apparatus 10 can judge whether the search keyword corresponds to the item of the address, by taking into consideration the situation in which the user is utilizing the client terminal 20.

Furthermore, in the example of this embodiment, the searching information is the facility information, however, the searching information may be information other than the facility information. In this case, the user-related information may be generated in correspondence with the items of the information other than the facility information.

Moreover, the information storage part 16 is not limited to the RDB (Relational Data-Base). For example, the full-text search engine may be utilized for the information storage part 16. In this case, document information that is the target of the full-text search may be a CSV file storing the facility information of one facility for each line, for example. Each line may store values of items of the facility information, segmented by commas.

In order to increase the search speed from such a CSV file, the inverted index may be generated for each item. In other words, in the case of the facility information used in this embodiment, the inverted index may be generated for each of the name, address, telephone number, genre, and position information. For example, the inverted index of the name may become the inverted index that stores a line including the word, for each word included in the names of all of the facility information. Similarly, the inverted index of the address may become the inverted index that stores a line including the word, for each word included in the addresses of all of the facility information.

By configuring the information storage part 16 as described above, the line of the facility information matching the search condition can be specified at a high speed using the inverted index.

In addition, the information managing apparatus 10 is not limited to being configured by a single computer. For example, the information managing apparatus 10 may be configured to include a first computer and a second computer that are communicable connected to each other. In this case, the first computer may perform the functions of the search request accepting part 11, the item judging part 12, the user-related information registering part 15, the user-related information storage part 17, the address judging information storage part 18, and the genre judging information storage part 19, for example. On the other hand, the second computer may perform the functions of the search part 13, the search result return part 14, and the information storage part 16, for example.

Further, although the present invention disclosed herein is described by way of embodiments, the present invention is not limited to these embodiments, and various variations and modifications may be made without departing from the scope of the present invention.

### DESCRIPTION OF THE REFERENCE NUMERALS

- 1: Information managing system
- 10: Information managing apparatus
- 11: Search request accepting part
- 12: Item judging part
- 13: Search part
- 14: Search result return part
- 15: User-related information registering part
- 16: Information storage part
- 17: User-related information storage part
- 18: Address judging information storage part
- 19: Genre judging information storage part
- 20: Client terminal
- 100: Drive unit
- 101: Recording medium
- 102: Auxiliary storage unit
- 103: Memory device
- 104: CPU
- 105: Interface unit
- B: Bus

## Claims

1. A search method to be implemented in a computer which performs a process to search searching information including a plurality of items that are targets of information search, the process comprising:
in response to receiving a search request for the searching information, comparing one or more first character strings stored in a storage in a related manner to information related to a source of the search request, and a second character string specified in the search request, in order to judge the item corresponding to the second character string based on a result of the comparing; and
searching the searching information using the second character string as a search condition related to the item that is judged as corresponding to the second character string.

2. The search method as claimed in claim 1, wherein the storage stores one or more character strings in a related manner to information that identifies a user at a source of the search request or a terminal at the source of the search request.

3. The search method as claimed in claim 2, **characterized in that** the one or more character strings stored in the storage are information related to an address received from the user or the terminal.

4. An information managing apparatus **characterized in that** there are provided:
a search request accepting part configured to receive a search request for searching information including a plurality of items that are targets of information search;
a storage configured to store one or more first character strings in a related manner to information related to a source of the search request; and
an item judging part configured to judge, based on a result of comparing the one or more first character strings stored in the storage and a second character string specified in the search request, the item corresponding to the second character string, and to generate a search condition in which the second character string is used as a search keyword corresponding to the item that is judged as corresponding to the second character string.

5. The information managing apparatus as claimed in claim 4, wherein the storage stores one or more character strings in a related manner to information that identifies a user at a source of the request source or a terminal at the source of the search request.

6. The information managing apparatus as claimed in claim 5, **characterized in that** there is further provided:
a user-related information registering part configured to store information related to an address received from the user or the terminal in the storage as the one or more character strings stored.
